# EUROPEAN PATENT SPECIFICATION

(11) **EP 3 725 375 B1**
(45) Date of publication and mention of the grant of the patent: **27.12.2023**
(21) Application number: 19211917.0
(22) Date of filing: 27.11.2019
(51) Int. Cl.: A62D 1/00, A62C 2/00

(54) **METHOD AND APPARATUS FOR STABILIZING FIRE SUPPRESSION AGENTS IN SITU**
VERFAHREN UND VORRICHTUNG ZUR STABILISIERUNG VON FEUERLÖSCHMITTELN IN SITU
PROCÉDÉ ET APPAREIL DE STABILISATION D'AGENTS DE LUTTE CONTRE L'INCENDIE IN SITU

(30) Priority: 19.04.2019 US 201916388975
(43) Date of publication of application: 21.10.2020
(73) Proprietor: Kidde Technologies, Inc., Wilson, NC 27896 (US)
(72) Inventor: SIMPSON, Terry, Wake Forest, NC North Carolina 27587 (US); CHATTAWAY, Adam, Old Windsor, Berkshire SL4 2QG (GB)
(74) Representative: Dehns

(56) References cited:
- US-A- 5 695 688
- US-A1- 2005 178 566
- US-A1- 2019 055 442

## Description

### BACKGROUND

Exemplary embodiments of the present disclosure pertain to the art of fire suppression agent stabilization.

Halon 1301 has frequently been employed as a fire suppression agent but there is currently a desire to replace Halon 1301 with more environmentally friendly fire suppression agents or blends of agents. Some of the proposed alternatives to Halon 1301 are less stable than Halon 1301 so solutions must be found that will improve the stability of the alternative fire suppression agents and allow the alternative fire suppression agents to be stored in the fire extinguisher system for extended periods of time.

US 2005/0178566 discloses a method and apparatus for preventing freezing at an outlet of a fire extinguisher through use of zeolite for Halon 1301.

### BRIEF DESCRIPTION

Disclosed is a method according to claim 1 for stabilizing a fire suppression agent, including: substantially continuously contacting a solid radical scavenging agent with a liquid fire suppression agent in a fire extinguisher, wherein the fire suppression agent comprises CF₃I.

In addition to one or more of the features described above, or as an alternative to any of the foregoing embodiments, the solid radical scavenging agent is located in a container having a plurality of openings sized to contain the solid radical scavenging agent within the container and the container is located in the fire extinguisher.

In addition to one or more of the features described above, or as an alternative to any of the foregoing embodiments, the solid radical scavenger includes a zeolite.

In addition to one or more of the features described above, or as an alternative to any of the foregoing embodiments, the zeolite may be coated with an additional radical scavenger.

In addition to one or more of the features described above, or as an alternative to any of the foregoing embodiments, the solid radical scavenging agent includes a solid support coated with a radical scavenger. The solid support may include glass beads, silica gel, mesh, or a combination thereof. The solid radical scavenging agent may further include a zeolite. The zeolite may be coated with a radical scavenger.

In addition to one or more of the features described above, or as an alternative to any of the foregoing embodiments, the method may further include contacting the fire suppression agent with a drying agent.

Also disclosed is an apparatus according to claim 8 for stabilizing a fire suppression agent including a fire extinguisher bottle, and a container disposed in the fire extinguisher bottle and a solid radical scavenging agent disposed within the container, wherein the container has a plurality of openings to contain the solid radical scavenging agent within the container and allow substantially continuous contact with the fire suppression agent, and further wherein the container is removeably attached to the fire extinguisher bottle and the fire suppression agent comprises CF₃I.

In addition to one or more of the features described above, or as an alternative to any of the foregoing embodiments, the solid radical scavenging agent comprises a zeolite. The zeolite may be coated with an additional radical scavenger.

In addition to one or more of the features described above, or as an alternative to any of the foregoing embodiments, the solid radical scavenging agent includes a solid support coated with a radical scavenger. The solid support may include glass beads, silica gel, mesh, or a combination thereof. The solid radical scavenging agent may further include a zeolite. The zeolite may be coated with a radical scavenger.

### BRIEF DESCRIPTION OF THE DRAWINGS

The following descriptions should not be considered limiting in any way. With reference to the accompanying drawings, like elements are numbered alike:

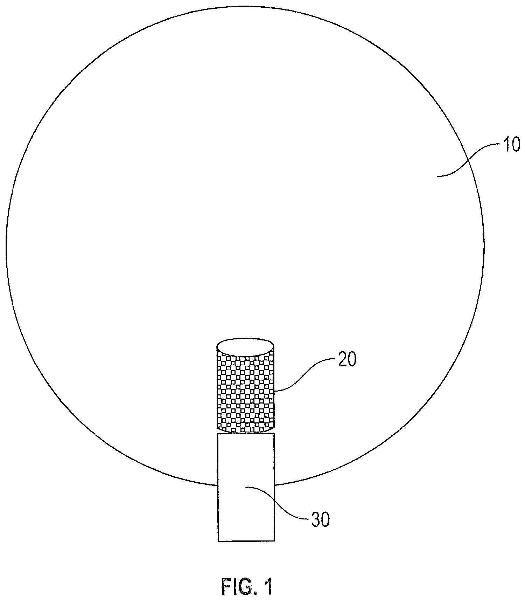

FIG. 1 is a schematic representation of an apparatus for stabilizing a fire suppression agent.

### DETAILED DESCRIPTION

A detailed description of one or more embodiments of the disclosed apparatus and method are presented herein by way of exemplification and not limitation with reference to the Figure.

CF₃I and blends including CF₃I are an environmentally attractive alternative to fire extinguishing agents like Halon 1301 because CF₃I has a lower ozone depletion potential. The lower ozone depletion potential is due to the lower stability of the molecule. The lower stability (or the increased tendency to degrade) presents a challenge for long term storage of CF₃I or blends containing CF₃I as a fire suppression agent. CF₃I forms radicals as it degrades and these radicals can initiate further degradation and undesirable by products. One approach to resolving the storage problem is to substantially continuously contact the fire suppression agent with a solid radical scavenging agent. As used herein "substantially continuously contact" is defined as having the fire suppression agent in contact with the solid radical scavenging agent for at least 90% of the time that the fire suppression agent is stored in the fire extinguisher.

The fire suppression agent includes CF₃I optionally in combination with one or more of HFC-125, HCFO-1233zd(e), Novec 1230, and CO₂. When used in combination with another fire suppression agent the CF₃I may be present in an amount greater than or equal to 30 wt%, or, greater than or equal to 35 wt%, or, greater than or equal to 40 wt%, based on the total weight of the fire suppression agent. Exemplary combinations are shown in the following table.

| | |
|---|---|
| CF₃I | HFC-125 |
| 45wt% | 55wt% |
| CF₃I | Novec 1230 |
| 44wt% | 56wt% |
| CF₃I | HCFO-1233zd(e) |
| 65wt% | 35wt% |

In some embodiments the solid radical scavenger includes a zeolite. Exemplary zeolites include zeolites having a Si/Al molar ratio greater than 1, or, greater than or equal to 1.5, or, greater than or equal to 5. Any of the foregoing zeolites may sodium in the form of ions or atoms.

In some embodiments the zeolite is coated with an additional radical scavenger. Exemplary additional radical scavengers include copper, silver, and iodide compounds having a melting point greater than 96.11°C (205°F) such as high molecular weight alkyl iodide compounds, high molecular weight alkene iodide compounds and high molecular weight aromatic iodide compounds. High molecular weight iodide compounds have a melting point greater than 96.11°C (205°F).

In some embodiments the solid radical scavenger includes a solid support coated with a radical scavenger. Exemplary solid supports include glass beads, plastic beads, mesh, silica gel, and combinations thereof. The radical scavenger coating would include one or more of the additional radical scavengers listed in the paragraph above.

The solid radical scavenger would be present in an amount sufficient to stabilize the fire suppression agent for greater than or equal to 5 years, or, greater than or equal to 20 years. The amounts of solid radical scavenger are 0.1 to 1 weight percent based on the total amount of CF₃I.

It may be advantageous to combine the solid radical scavenging with a drying agent. The drying agent could facilitate water removal from the fire suppression agent and prevent freezing of the water during discharge which could result in blockage of the discharge apparatus.

Turning now to FIG. 1, an exemplary apparatus for stabilizing a fire suppression agent is shown. The apparatus includes a fire extinguisher bottle, 10, and a container 20 disposed in the fire extinguisher bottle. The container is shown removeably attached to the fire extinguisher bottle via the discharge/fill apparatus 30 although the container may be removeably attached to another location in the fire extinguisher bottle.

In some embodiments the container 20 is a screen tube assembly made of mesh having a grid size small enough to retain the solid radical scavenger. In some embodiments the mesh of the container is the solid support which is coated with a solid radical scavenger.

The terminology used herein is for the purpose of describing particular embodiments only and is not intended to be limiting of the present disclosure. It is intended that the present disclosure not be limited to the particular embodiment disclosed as the best mode contemplated for carrying out this present disclosure, but that the present disclosure will include all embodiments falling within the scope of the claims.

## Claims

1. A method for stabilizing a fire suppression agent, comprising:
substantially continuously contacting 0.1 to 1 weight percent of a solid radical scavenging agent with a liquid fire suppression agent in a fire extinguisher, wherein the fire suppression agent comprises CF₃I, and **characterized in that** the amount of solid radical scavenging agent is based on the total amount of CF₃I, and the solid radical scavenging agent comprises zeolite or a solid support coated with one or more of an iodide compound having a melting point greater than 96.11°C (205°F), copper, and silver; wherein "substantially continuously contacting" is defined as having the fire suppression agent in contact with the solid radical scavenging agent for at least 90% of the time that the fire suppression agent is stored in the fire extinguisher.

2. The method of claim 1, wherein the solid radical scavenging agent is located in a container having a plurality of openings sized to contain the solid radical scavenging agent within the container and the container is located in the fire extinguisher.

3. The method of claim 1 or 2, wherein the solid radical scavenger comprises a zeolite, and optionally wherein the zeolite is coated with an additional radical scavenger comprising one or more of an iodide compound having a melting point greater than 96.11°C (205°F), copper, and silver.

4. The method of any preceding claim, wherein the solid radical scavenging agent comprises a solid support coated with a radical scavenger comprising one or more of an iodide compound having a melting point greater than 96.11°C (205°F), copper, and silver.

5. The method of any preceding claim, wherein the solid support comprises glass beads, plastic beads, silica gel, mesh, or a combination thereof.

6. The method of claim 5, wherein the solid radical scavenging agent further comprises a zeolite.

7. The method of claim 6, wherein the zeolite is coated with a radical scavenger comprising one or more of an iodide compound having a melting point greater than 96.11°C (205°F), copper, and silver.

8. An apparatus for stabilizing a fire suppression agent comprising:
a fire extinguisher bottle (10), and
a container (20) disposed in the fire extinguisher bottle and a 0.1 to 1 weight percent of solid radical scavenging agent disposed within the container, wherein the container has a plurality of openings to contain the solid radical scavenging agent within the container and allow substantially continuous contact with the fire suppression agent, and further wherein the container (20) is removably attached to the fire extinguisher bottle and the fire suppression agent comprises CF₃I, and **characterized in that** the amount of solid radical scavenging agent is based on the total amount of CF₃I, and the solid radical scavenging agent comprises zeolite or a solid support coated with one or more of an iodide compound having a melting point greater than 96.11°C (205°F), copper, and silver; wherein "substantially continuous contact" is defined as having the fire suppression agent in contact with the solid radical scavenging agent for at least 90% of the time that the fire suppression agent is stored in the fire extinguisher.

9. The apparatus of claim 8, wherein the solid radical scavenging agent comprises a zeolite.

10. The apparatus of claim 9, wherein the zeolite is coated with an additional radical scavenger comprising one or more of an iodide compound having a melting point greater than 96.11°C (205°F), copper, and silver.

11. The apparatus of any of claims 8 to 10, wherein the solid radical scavenging agent comprises a solid support coated with a radical scavenger comprising one or more of an iodide compound having a melting point greater than 96.11°C (205°F), copper, and silver.

12. The apparatus of claim 11, wherein the solid support comprises glass beads, silica gel, mesh, or a combination thereof.

13. The apparatus of claim 11, wherein the solid radical scavenging agent further comprises a zeolite.

14. The apparatus of claim 13, wherein the zeolite is coated with a radical scavenger comprising one or more of an iodide compound having a melting point greater than 96.11°C (205°F), copper, and silver.

## Patentansprüche

1. Verfahren zum Stabilisieren eines Feuerlöschmittels, umfassend:
im Wesentlichen kontinuierliches Inkontaktbringen von 0,1 bis 1 Gewichtsprozent eines Feststoff-Radikalfangmittels mit einem flüssigen Feuerlöschmittel in einem Feuerlöscher, wobei das Feuerlöschmittel CF₃I umfasst und **dadurch gekennzeichnet ist, dass** die Menge des Feststoff-Radikalfangmittels auf der Gesamtmenge an CF₃I basiert und das Feststoff-Radikalfangmittel Zeolith oder einen festen Träger umfasst, der mit einer oder mehreren von einer Iodidverbindung mit einem Schmelzpunkt von mehr als 96,11°C (205°F), Kupfer und Silber beschichtet ist; wobei "im Wesentlichen kontinuierliches Inkontaktbringen" definiert ist als Vorweisen des Feuerlöschmittels als in Kontakt stehend mit dem Feststoff-Radikalfangmittel für mindestens 90% der Zeit, in der das Feuerlöschmittel in dem Feuerlöscher gelagert ist.

2. Verfahren nach Anspruch 1, wobei das Feststoff-Radikalfangmittel in einem Behälter angeordnet ist, der eine Vielzahl von Öffnungen aufweist, die bemessen sind, um das Feststoff-Radikalfangmittel innerhalb des Behälters zu enthalten, und der Behälter in dem Feuerlöscher angeordnet ist.

3. Verfahren nach Anspruch 1 oder 2, wobei der Feststoff-Radikalfänger einen Zeolith umfasst und wobei der Zeolith gegebenenfalls mit einem zusätzlichen Radikalfänger beschichtet ist, der eine oder mehrere Iodidverbindungen mit einem Schmelzpunkt von mehr als 96,11°C (205°F), Kupfer und Silber aufweist.

4. Verfahren nach einem der vorhergehenden Ansprüche, wobei das Feststoff-Radikalfangmittel einen festen Träger umfasst, der mit einem Radikalfänger beschichtet ist, der eine oder mehrere Iodidverbindungen mit einem Schmelzpunkt von mehr als 96,11 °C (205 °F), Kupfer und Silber umfasst.

5. Verfahren nach einem der vorhergehenden Ansprüche, wobei der feste Träger Glaskügelchen, Kunststoffkügelchen, Kieselgel, Netz oder eine Kombination davon umfasst.

6. Verfahren nach Anspruch 5, wobei das Feststoff-Radikalfangmittel ferner einen Zeolith umfasst.

7. Verfahren nach Anspruch 6, wobei der Zeolith mit einem Radikalfänger beschichtet ist, der eine oder mehrere einer Iodidverbindung mit einem Schmelzpunkt von mehr als 96,11°C (205°F), Kupfer und Silber umfasst.

8. Vorrichtung zum Stabilisieren eines Feuerlöschmittels, umfassend:
eine Feuerlöscherflasche (10) und
einen in der Feuerlöscherflasche angeordneten Behälter (20) und ein 0,1 bis 1 Gewichtsprozent Feststoff-Radikalfangmittel, das in dem Behälter angeordnet ist, wobei der Behälter eine Vielzahl von Öffnungen aufweist, um das Feststoff-Radikalfangmittel in dem Behälter zu enthalten und einen im Wesentlichen kontinuierlichen Kontakt mit dem Feuerlöschmittel zu ermöglichen, und wobei ferner der Behälter (20) abnehmbar an der Feuerlöscherflasche angebracht ist und das Feuerlöschmittel CF₃I umfasst, und **dadurch gekennzeichnet, dass** die Menge des Feststoff-Radikalfangmittels auf der Gesamtmenge an CF₃I basiert und das Feststoff-Radikalfangmittel Zeolith oder einen festen Träger umfasst, der mit einer oder mehreren von einer Iodidverbindung mit einem Schmelzpunkt von mehr als 96,11°C (205°F), Kupfer und Silber beschichtet ist; wobei "im Wesentlichen kontinuierlicher Kontakt" definiert ist als Vorweisen des Feuerlöschmittels als in Kontakt stehend mit dem Feststoff-Radikalfangmittel während mindestens 90% der Zeit, in der das Feuerlöschmittel in dem Feuerlöscher gelagert ist.

9. Vorrichtung nach Anspruch 8, wobei das Feststoff-Radikalfangmittel einen Zeolith umfasst.

10. Vorrichtung nach Anspruch 9, wobei der Zeolith mit einem zusätzlichen Radikalfänger beschichtet ist, der eine oder mehrere einer Iodidverbindung mit einem Schmelzpunkt von mehr als 96,11°C (205°F), Kupfer und Silber umfasst.

11. Vorrichtung nach einem der Ansprüche 8 bis 10, wobei das Feststoff-Radikalfangmittel einen festen Träger umfasst, der mit einem Radikalfänger beschichtet ist, der eine oder mehrere Iodidverbindungen mit einem Schmelzpunkt von mehr als 96,11 °C (205 °F), Kupfer und Silber umfasst.

12. Vorrichtung nach Anspruch 11, wobei der feste Träger Glaskügelchen, Kieselgel, Netz oder eine Kombination davon umfasst.

13. Vorrichtung nach Anspruch 11, wobei das Feststoff-Radikalfangmittel ferner einen Zeolith umfasst.

14. Vorrichtung nach Anspruch 13, wobei der Zeolith mit einem zusätzlichen Radikalfänger beschichtet ist, der eine oder mehrere einer Iodidverbindung mit einem Schmelzpunkt von mehr als 96,11°C (205°F), Kupfer und Silber umfasst.

## Revendications

1. Procédé de stabilisation d'un agent de lutte contre l'incendie, comprenant :
la mise en contact de manière sensiblement continue de 0,1 à 1 pour cent en poids d'un agent piégeur de radicaux solide avec un agent de lutte contre l'incendie liquide dans un extincteur, dans lequel l'agent de lutte contre l'incendie comprend du CF₃I, et **caractérisé en ce que** la quantité d'agent piégeur de radicaux solide est basée sur la quantité totale de CF₃I, et l'agent piégeur de radicaux solide comprend une zéolite ou un support solide recouvert d'un ou plusieurs composés parmi un composé iodure ayant un point de fusion supérieur à 96,11 °C (205 °F), le cuivre et l'argent ; dans lequel « la mise en contact de manière sensiblement continue » est définie comme le fait que l'agent de lutte contre l'incendie soit en contact avec l'agent piégeur de radicaux solide pendant au moins 90 % du temps pendant lequel l'agent de lutte contre l'incendie est stocké dans l'extincteur.

2. Procédé selon la revendication 1, dans lequel l'agent piégeur de radicaux solide est situé dans un récipient ayant une pluralité d'ouvertures dimensionnées pour contenir l'agent piégeur de radicaux solide à l'intérieur du récipient et le récipient est situé dans l'extincteur.

3. Procédé selon la revendication 1 ou 2, dans lequel l'agent piégeur de radicaux solide comprend une zéolite, et éventuellement dans lequel la zéolite est recouverte d'un agent piégeur de radicaux supplémentaire comprenant un ou plusieurs composés parmi un composé iodure ayant un point de fusion supérieur à 96,11 °C (205 °F), le cuivre et l'argent.

4. Procédé selon une quelconque revendication précédente, dans lequel l'agent piégeur de radicaux solide comprend un support solide recouvert d'un agent piégeur de radicaux comprenant un ou plusieurs composés parmi un composé iodure ayant un point de fusion supérieur à 96,11 °C (205 °F), le cuivre et l'argent.

5. Procédé selon une quelconque revendication précédente, dans lequel le support solide comprend des billes de verre, des billes de plastique, du gel de silice, un tamis ou une combinaison de ceux-ci.

6. Procédé selon la revendication 5, dans lequel l'agent piégeur de radicaux solide comprend en outre une zéolite.

7. Procédé selon la revendication 6, dans lequel la zéolite est recouverte d'un agent piégeur de radicaux comprenant un ou plusieurs composés parmi un composé iodure ayant un point de fusion supérieur à 96,11 °C (205 °F), le cuivre et l'argent.

8. Appareil de stabilisation d'un agent de lutte contre l'incendie comprenant :
une bouteille d'extincteur (10), et
un récipient (20) disposé dans la bouteille d'extincteur et 0,1 à 1 pour cent en poids d'agent piégeur de radicaux solide disposé à l'intérieur du récipient, dans lequel le récipient a une pluralité d'ouvertures pour contenir l'agent piégeur de radicaux solide à l'intérieur du récipient et permettre une mise en contact sensiblement continue avec l'agent de lutte contre l'incendie, et dans lequel en outre le récipient (20) est fixé de manière amovible à la bouteille d'extincteur et l'agent de lutte contre l'incendie comprend du CF₃I, et **caractérisé en ce que** la quantité d'agent piégeur de radicaux solide est basée sur la quantité totale de CF₃I, et l'agent piégeur de radicaux solide comprend une zéolite ou un support solide recouvert d'un ou plusieurs composés parmi un composé iodure ayant un point de fusion supérieur à 96,11 °C (205 °F), du cuivre et de l'argent ; dans lequel une « mise en contact sensiblement continue » est définie comme le fait que l'agent de lutte contre l'incendie soit en contact avec l'agent piégeur de radicaux solide pendant au moins 90 % du temps pendant lequel l'agent extincteur est stocké dans l'extincteur.

9. Appareil selon la revendication 8, dans lequel l'agent piégeur de radicaux solide comprend une zéolite.

10. Appareil selon la revendication 9, dans lequel la zéolite est recouverte d'un agent piégeur de radicaux comprenant un ou plusieurs composés parmi un composé iodure ayant un point de fusion supérieur à 96,11 °C (205 °F), le cuivre et l'argent.

11. Appareil selon l'une quelconque des revendications 8 à 10, dans lequel l'agent piégeur de radicaux solide comprend un support solide recouvert d'un agent piégeur de radicaux comprenant un ou plusieurs composés parmi un composé iodure ayant un point de fusion supérieur à 96,11 °C (205 °F), le cuivre et l'argent.

12. Appareil selon la revendication 11, dans lequel le support solide comprend des billes de verre, du gel de silice, un tamis ou une combinaison de ceux-ci.

13. Appareil selon la revendication 11, dans lequel l'agent piégeur de radicaux solide comprend une zéolite.

14. Appareil selon la revendication 13, dans lequel la zéolite est recouverte d'un agent piégeur de radicaux comprenant un ou plusieurs composés parmi un composé iodure ayant un point de fusion supérieur à 96,11 °C (205 °F), le cuivre et l'argent.
